# EUROPÄISCHE PATENTSCHRIFT

(11) **EP 1 213 292 B1**
(45) Veröffentlichungstag und Bekanntmachung des Hinweises auf die Patenterteilung: **25.02.2004**
(21) Anmeldenummer: 01127820.7
(22) Anmeldetag: 22.11.2001
(51) Int. Cl.: C07F 7/21, C08G 77/04

(54) **Oligomere Silasesquioxane, deren Herstellung und deren Verwendung zur Synthese von nicht vollständig kondensierten Silasesquioxanen, von Katalysatoren und deren Ausgangsverbindungen sowie von Polymeren**
Oligomeric silsesquioxanes, their preparation and their use in the synthesis of not fully condensed silsesquioxanes, of catalysts and their precursors as well as of polymers
Silsesquioxanes oligomèriques, leur préparation et leur utilisation dans la synthèse des silsesquioxanes non complètement condensés, des catalyseurs et de leurs précurseurs ainsi que des polymères

(30) Priorität: 07.12.2000 DE 10060776
(43) Veröffentlichungstag der Anmeldung: 12.06.2002
(73) Patentinhaber: Creavis Gesellschaft für Technologie und Innovation mbH, 45764 Marl (DE)
(72) Erfinder: Kühnle, Adolf, Dr., 45770 Marl (DE); Duda, Mark, Dr., 67071 Ludwigshafen (DE); Jost, Carsten, Dr., 45770 Marl (DE); Van Santen, Rutger Anthony, Professor Dr., 5631 LL Eindhoven (NL); Abbenhuis, Hendrikus Cornelis Louis, Dr., 5672 RB Nuenen (NL); Skowronska-Ptasinska, Maria Danuta, Dr., 5629 GM Eindhoven (NL)

(56) Entgegenhaltungen:
- RATTAY, MICHAEL ET AL: "Highly functionalized octasilsesquioxanes synthesis, structure and reactivity" ORGANOSILICON CHEMISTRY IV, [LECT. POSTER CONTRIB. MUECHNER SILICONTAGE], 4TH (2000), MEETING DATE 1998, 526-530. EDITOR(S): AUNER, NORBERT;WEIS, JOHANN. PUBLISHER: WILEY-VCH VERLAG GMBH, WEINHEIM, GERMANY. , XP001037158
- UNNO, MASAFUMI ET AL: "Synthesis of ladder and cage silsesquioxanes from 1,2,3,4- tetrahydroxycyclotetrasiloxane" BULLETIN OF THE CHEMICAL SOCIETY OF JAPAN, Bd. 73, Nr. 1, 2000, Seiten 215-220, XP001037301 ISSN: 0009-2673
- UNNO, MASAFUMI ET AL: "Synthesis of Hexasilsesquioxanes Bearing Bulky Substituents: Hexakis((1,1,2-trimethylpropyl)silsesquiox ane) and Hexakis(tert- butylsilsesquioxane)" ORGANOMETALLICS, Bd. 15, Nr. 9, 30. April 1996 (1996-04-30), Seiten 2413-2414, XP001038445 ISSN: 0276-7333
- DATABASE CA [Online] CHEMICAL ABSTRACTS SERVICE, COLUMBUS, OHIO, US; MARTYNOVA, T. N.: "Alkylsilsesquioxanes" retrieved from STN Database accession no. 97:39136 XP002193123 -& SU 668 280 A (NOVOSIBIRSK INSTITUTE OF ORGANIC CHEMISTRY, USSR) 15. Dezember 1981 (1981-12-15)
- ANDRIANOV, K. A. ET AL: "Hydrolytic polycondensation of higher alkyltriethoxysilanes" JOURNAL OF GENERAL CHEMISTRY OF THE USSR (ENGLISH TRANSLATION), Bd. 46, Nr. 1, 10. Juli 1976 (1976-07-10), Seiten 115-117, XP001062631 ISSN: 0022-1279
- ANDRIANOV, K. A. ET AL: "Hydrolytic polycondensation of higher alkyltrichlorosilanes" JOURNAL OF ORGANOMETALLIC CHEMISTRY, Bd. 8, Nr. 3, 1967, Seiten 435-441, XP000980627 ISSN: 0022-328X
- ANDRIANOV K A ET AL: "Hydrolytic polycondensation of higher alkyltrichlorosilanes" JOURNAL OF GENERAL CHEMISTRY OF THE USSR (ENGLISH TRANSLATION), Bd. 36, Nr. 2, 1966, Seiten 350-4, XP001038567 ISSN: 0022-1279
- SPRUNG M M ET AL: "The partial hydrolysis of ethyltriethoxysilane" JOURNAL OF THE AMERICAN CHEMICAL SOCIETY, Bd. 77, 1955, Seiten 3996-4002, XP001027039 ISSN: 0002-7863
- SPRUNG M M ET AL: "The partial hydrolysis of methyltriethoxysilane" JOURNAL OF THE AMERICAN CHEMICAL SOCIETY, Bd. 77, 1955, Seiten 3990-3996, XP001037302 ISSN: 0002-7863
- BARRY A J ET AL: "Crystalline organosilsesquioxanes" JOURNAL OF THE AMERICAN CHEMICAL SOCIETY, Bd. 77, 1955, Seiten 4248-4252, XP001026814 ISSN: 0002-7863
- VORONKOV M G ET AL: "Polyhedral Oligosilsesquioxanes and Their Homo Derivatives" TOPICS IN CURRENT CHEMISTRY, Bd. 102, 1982, Seiten 199-236, XP001037154 ISSN: 0340-1022
- IZMAILOV B A ET AL: "Synthesis and properties of oligoalkylsilasesquioxanes with large alkyl substituents and terminal trimethylsiloxy groups" JOURNAL OF GENERAL CHEMISTRY OF THE USSR (ENGLISH TRANSLATION), Bd. 52, Nr. 3, 1982, Seiten 562-565, XP001037303 ISSN: 0022-1279
- LAVRET'EV V I ET AL: "Formation of polyhedral oligo ethyl silasesquioxanes in th hydrolysis of trichloroethylsilane" JOURNAL OF GENERAL CHEMISTRY OF THE USSR (ENGLISH TRANSLATION), Bd. 53, Nr. 5, 1983, Seiten 978-985, XP001037225 ISSN: 0022-1279

## Beschreibung

Die Erfindung betrifft oligomere Silasesquioxane der Formel R₆Si₆O₉ (R = Alkyl, Cycloalkyl (c-C₃H₅, c-C₄H₇, c-C₅H₉, c-C₇H₁₃, c-C₈H₁₅, c-C₉H₁₇, c-C₁₀H₁₉), Alkenyl, Cycloalkenyl, Alkinyl, Cycloalkinyl, Aryl, Heteroaryl) und der Struktur **I** sowie ein Verfahren zur Herstellung von oligomeren Silasesquioxanen der Formel R₆Si₆O₉ (R = Alkyl, Cycloalkyl, Alkenyl, Cycloalkenyl, Alkinyl, Cycloalkinyl, Aryl, Heteroaryl) und der Struktur **I** sowie deren Verwendung zur Synthese von nicht vollständig kondensierten Silasesquioxanen, von Katalysatoren und deren Ausgangsverbindungen sowie von Polymeren.

Oligomere Silasesquioxane können als Ausgangsstoffe für die Synthese von Polymeren mit einem breiten Anwendungsfeld verwendet werden. Diese Polymeren können beispielsweise in Form von Coatingmaterialien oder als Füllstoffe ihre Verwendung finden. Die Polysilasesquioxane weisen, da sie organische und anorganische Bestandteile enthalten, eine gegenüber rein organischen Verbindungen verbesserte Temperaturstabilität auf.

Lichtenhan et al. beschreiben in US 5,484,867 die Verwendung von oligomeren Silasesquioxanen mit einer reaktiven Eck-Gruppe sowie in US 5,412,053 die Verwendung von difunktionalen oligomeren Silasesquioxanen zur Synthese von Polysilasesquioxanen. Da in der oligomeren Silasesquioxaneinheit die Grundstruktur des Polymers schon vorgebildet ist, können mit diesen Verfahren viele Nachteile der direkten Polymerisation aus den Silan-Monomeren, wie z.B. die Bildung von unerwünschten Nebenprodukten, vermieden werden. Neuerdings gewinnen metallhaltige oligomere Silasesquioxane hinsichtlich ihrer möglichen Verwendung als Katalysatoren immer mehr an Bedeutung (*Chem. Eur. J.* **2000**, *6*, 25-32).
Die Synthese von oligomeren Silasesquioxanen erfolgt in der Regel durch hydrolytische Kondensation trifunktioneller RSiY₃-Precursor, wobei R für einen Kohlenwasserstoffrest steht und Y eine hydrolisierbare Gruppe wie z. B. Chlorid, Alkoxid oder Siloxid darstellt (*J. Am. Chem. Soc.* **1989,** *111,* 1741-1748; *Organometallics* **1991,** *10,* 2526-2528). Üblicherweise werden dabei Gemische von vollständig und unvollständig kondensierten oligomeren Silasesquioxanen erhalten. Ein wichtiges, vollständig kondensiertes, oligomeres Silasesquioxan stellt die Verbindung R₆Si₆O₉ (**I**) dar.

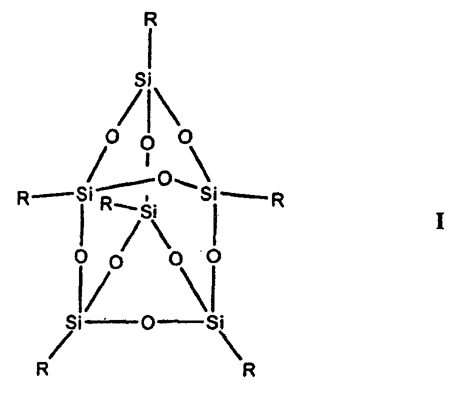

Diese Verbindung der Struktur **I** ist bisher nur mit dem Rest R = Cyclohexyl in isolierbaren Ausbeute hergestellt worden. Dabei ist die Synthese der Verbindung mit der Struktur **I**, welche häufig auch durch ihre Summenformel (c-C₆H₁₁SiO_{1,5})₆ beschrieben wird, gekennzeichnet durch eine nicht befriedigende Ausbeute von 7 % bei einer außerordentlich langen Reaktionszeit von über einem Jahr (*J. Am. Chem. Soc*. **1989**, *111*, 1741-1748). Verbindungen der Struktur **I** mit anderen Kohlenwasserstoffresten R sind in isolierter Form nicht bekannt.

Die Verbindung der Struktur **I** mit R = c-C₆H₁₁ kann durch eine Reaktion erhalten werden, die dadurch gekennzeichnet ist, dass eine Monomer-Konzentration von 0,2 mol/l verwendet wird, die allgemein üblich ist für die Synthese von oligomeren Silasesquioxanen und die bislang zur Vermeidung der direkten Polykondensation zu Polysilasesquioxanen nicht überschritten wurde (*Top. Curr. Chem.* **1982,** *102,* 199-236).

M. Rattey et al. beschreiben in *Organosilicon Chemistry IV, ,Lect. Poster Contrib. Müchner Silicontage 4*^{*th*} *(2000)* oligomere Silasesquioxane vom Typ (RSiO_{1,5})₆ mit R = 4-(Trimethylsilylethinyl)phenyl.

Oligomere Silasesquioxane vom Typ (RSiO)_{1,5})₆ mit R = iso-Propyl und 1,1,2-Trimethylpropyl werden von M. Unno et al. in *Bulletin of the Chemical Society of Japan 73 (2000), 215-220,* oligomere Silasesquioxane mit R = tert. Butyl vom selben Typ werden in *Organometallics **15** (1996), 2413-2414* beschrieben.

Die Patentanmeldung SU 668280 beschreibt oligomere Silasesquioxane vom Typ (RSiO_{1,5})₆ mit R = Methyl und Ethyl. Solche oligomeren Silasesquioxane sowie deren Herstellung werden von M. M. Sprung et al. in *Journal of the American Chemical Society **77** (1955), 3990-3996 bzw. 3996-4002* beschrieben. Oligomere Silasesquioxane mit R = Ethyl werden ebenfalls von V. I. Lavret'ev et al. in *Journal of General Chemistry of the USSR **53** (1983). 978-985* beschrieben.

K. A. Andrianov beschreibt oligomere Silasesquioxane vom Typ (RSiO)_{1,5})₆ mit R = iso-Nonyl sowie deren Herstellung in *Journal of General Chemistry of the USSR **46** (1976), 115-117* bzw. in *Journal of Organometallic Chemistry **8** (1967), 435-441* mit R = Heptyl, Octyl und iso-Nonyl. Oligomere Silasesquioxane vom Typ (RSiO_{1,5})₆ mit R = iso-Nonyl werden von K. A. Andrianov in *Journal of General Chemistry of the USSR **36** (1966), 350ff.* beschrieben.

Eine Beschreibung von oligomeren Silasesquioxane vom Typ (RSiO_{1,5})₆ mit R = Phenyl und deren Herstellung befindet sich in *Journal of the American Chemical Society **77** (1955), 4248*-4252 von A. J. Barry et al.

In *Topics in Current Chemistry* ***102*** *(1982), 199-236* werden oligomere Silasesquioxane vom Typ (RSiO_{1,5})₆ mit R = Methyl, Ethyl, Heptyl, Octyl und iso-Nonyl beschrieben. Oligomere Silasesquioxane vom Typ (RSiO_{1,5})₆ mit R = Octyl und iso-Nonyl werden ebenfalls in *Journal of General Chemistry of the USSR **52** (1982), 562-565* von B. A. Izmailov et al. beschrieben.

Verbindungen der Struktur **I** mit R = c-C₆H₁₁ sind unter anderem deshalb von großer Bedeutung, da sie basenkatalysiert mit R¹Si(OMe)₃ (R¹ = vinyl) zu funktionalisierten, unvollständig kondensierten Silasesquioxanen der Struktur **II** wie z. B. R₆R¹Si₇O₉(OH)₃ mit R = c-C₆H₁₁ und R¹ = vinyl umgesetzt werden können (*Chem. Commun.* **1999**, 2153-2154, *Polym. Mater. Sci. Eng.* **2000**, *82*, 301-302).

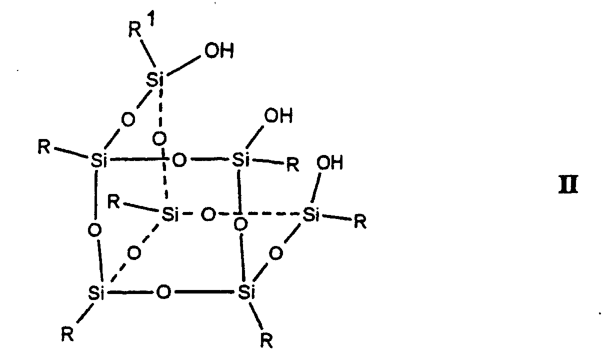

Bis jetzt sind aber nur wenige Silasesquioxane, die sich durch ihre Kohlenwasserstoffreste R bzw. R¹ unterscheiden, auf diesem Wege herstellbar.

Die Aufgabe der vorliegenden Erfindung bestand deshalb darin, bislang nicht zugängliche oligomere Silasesquioxane der Formel R₆Si₆O₉ und der Struktur I mit Resten R ≠ Cyclohexyl, sowie ein effizientes Verfahren zur Herstellung oligomerer Silasesquioxane der Formel R₆Si₆O₉ (R = i-Butyl, Benzyl, Cycloalkyl, Alkenyl, Cycloalkenyl, Alkinyl, Cycloalkinyl, Heteroaryl) und der Struktur **I** bereitzustellen.

Überraschenderweise wurde gefunden, dass bislang nicht zugängliche Silasesquioxane der Formel R₆Si₆O₉ und der Struktur **I** nicht nur mit verschiedensten Resten R = i-Butyl, Benzyl, Cycloalkyl (c-C₃H₅, c-C₄H₇, c-C₅H₉, c-C₇H₁₃, c-C₈H₁₅, c-C₉H₁₇, c-C₁₀H₁₉), Alkenyl, Cycloalkenyl, Alkinyl, Cycloalkinyl, Heteroaryl dargestellt werden können, sondern dass die Silasesquioxane der Formel R₆Si₆O₉ (R = i-Butyl, Benzyl, Cycloalkyl, Alkenyl, Cycloalkenyl, Alkinyl, Cycloalkinyl, Heteroaryl) und der Struktur I auch mit einer im Vergleich zum bisher bekannten Verfahren zur Darstellung von (Cyclohexyl)₆Si₆O₉ (*J. Am. Chem. Soc.* **1989**, *111*, 1741-1748; *Organometallics* **1991**, *10*, 2526-2528) deutlich erhöhten Ausbeute innerhalb einer stark verkürzten Reaktionszeit zu synthetisieren sind, wenn die Konzentration des Monomeren größer als 0,2 mol/l ist.

Gegenstand der vorliegenden Erfindung sind daher oligomere Silasesquioxane gemäß Anspruch 1 der Formel R₆Si₆O₉ mit R = i-Butyl, Benzyl, Cycloalkyl ungleich Cyclohexyl, Alkenyl, Cycloalkenyl, Alkinyl, Cycloalkinyl, Heteroaryl) und der Struktur **I**.

Ebenfalls Gegenstand der vorliegenden Erfindung ist ein Verfahren gemäß Anspruch 6 zur Herstellung von oligomeren Silasesquioxanen der Formel R₆Si₆O₉ mit R = i-Butyl, Benzyl, Cycloalkyl, Alkenyl, Cycloalkenyl, Alkinyl, Cycloalkinyl, und/oder Heteroaryl und der Struktur **I** durch Kondensation von Monomeren der Formel RSiX₃ wobei X eine hydrolisierbare Gruppe oder eine zu einer Kondensationsreaktion befähigte Gruppe sein kann, welches dadurch gekennzeichnet ist, dass die Kondensation in Lösung mit einer Konzentration an Monomeren von größer 0,2 mol/l durchgeführt wird.

Außerdem ist Gegenstand der vorliegenden Erfindung die Verwendung von oligomeren Silasesquioxanen gemäß der Ansprüche 1 bis 5 oder von oligomeren Silasesquioxanen, hergestellt nach zumindest einem der Ansprüche 6 bis 16, zur Synthese von Katalysatoren, deren Ausgangsverbindungen sowie Polymeren.

Ebenso ist Gegenstand der vorliegenden Erfindung die Verwendung von oligomeren Silasesquioxanen gemäß der Ansprüche 1 bis 5 oder von oligomeren Silasesquioxanen, hergestellt nach zumindest einem der Ansprüche 6 bis 16, für die Hydrolyse zu nicht vollständig kondensierten Silasesqioxanen.

Die vorliegende Erfindung stellt bisher unbekannte oligomere Silasesquioxane bereit, die als wichtige Ausgangsstoffe für weitere Derivatisierungen zu funktionalisierten, unvollständig kondensierten Silasesquioxanen und verschiedensten Folgeprodukten davon dienen können. Bislang waren Verbindungen der Struktur **I** lediglich für R = Cyclohexyl bekannt.

Das erfindungsgemäße Verfahren hat den Vorteil, dass nach kurzen Reaktionszeiten und in guten Ausbeuten Silasesquioxane der Summenformel R₆Si₆O₉ mit R = i-butyl, Benzyl, Cycloalkyl, Alkenyl, Cycloalkenyl, Alkinyl, Cycloalkinyl, und/oder Heteroaryl mit der Struktur **I** synthetisiert werden können. Diese Verbindungen können für die Darstellung von nicht vollständig kondensierten Silasesquioxanen, von Katalysatoren und deren Ausgangsverbindungen sowie von Polymeren eingesetzt werden.

Bislang galt die Annahme, dass Monomer-Konzentrationen größer als 0.2 mol/l die Polykondensation zu Polysilasesquioxanen begünstigen und deshalb neben oligomeren Silasesquioxanen größere Mengen an Polysilasesquioxanen als Nebenprodukte anfallen. Die beim erfindungsgemäßen Verfahren eingesetzten, höheren Konzentrationen führen nicht zur bevorzugten Bildung der literaturbekannten unvollständig kondensierten Silasesquioxane (*Organometallics* **1991**, *10,* 2526-2528), sondern im Gegensatz dazu werden die vollständig kondensierten hexameren Silasesquioxane der Formel R₆Si₆O₉ und der Struktur **I** nach kurzer Reaktionsdauer in guter Ausbeute erhalten. Diese haben den Vorteil, dass sie einen erleichterten Zugang zu unvollständig kondensierten Silasesquioxanen, zu Katalysatoren und deren Ausgangsverbindungen sowie zu Polymeren eröffnen.

Ein Aspekt der vorliegenden Erfindung sind deshalb oligomere Silasesquioxane der Formel R₆Si₆O₉ mit R = i-Butyl, Benzyl, Cycloalkyl ungleich Cyclohexyl, Alkenyl, Cycloalkenyl, Alkinyl, Cycloalkinyl, und/oder Heteroaryl und der Struktur **I.**

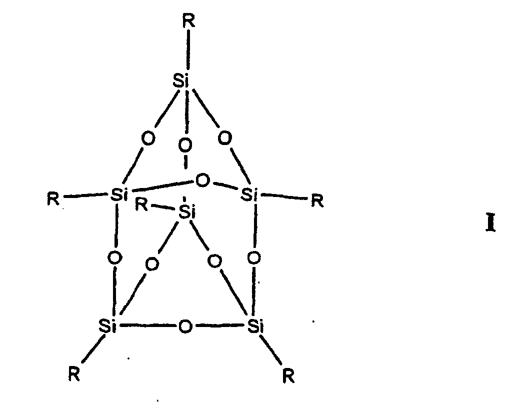

Vorzugsweise weisen diese oligomeren Silasesquioxane als Rest R zumindest eine i-Butyl-, Cyclopropyl-, Cyclobutyl-, Cyclopentyl-, Cycloheptyl-, Cyclooctanyl-, Cyclononanyl-, Cyclodecanyl-, Vinyl-, Propenyl-, ein- oder mehrfach ungesättigte Butenyl-, Cyclopropenyl-, ein- oder mehrfach ungesättigte Cyclobutenyl-, ein- oder mehrfach ungesättigte Cyclopentenyl-, ein- oder mehrfach ungesättigte Cyclohexenyl-, ein- oder mehrfach ungesättigte Cycloheptenyl-, ein- oder mehrfach ungesättigte Cyclooctenyl-, Ethin-, Propin-, ein- oder mehrfach ungesättigte Butin-, Benzyl- und/oder Pyridylgruppe auf. Diese Reste R können sowohl substituiert oder unsubstituiert vorliegen. Substituierte Reste R weisen z.B. an Stelle eines Wasserstoffatoms ein Halogenatom, wie z.B. Chlor oder Brom auf

Ganz besonders bevorzugt weist das oligomere Silasesquioxan als Rest R zumindest eine Cyclopentyl-, und/oder eine Cycloheptyl-Gruppe auf Die Reste R in den oligomeren Silasesquioxanen können gleich oder unterschiedlich sein. Die Summenformel lautet im Falle unterschiedlicher Reste R^{a}, R^{b},... bis R^{f} korrekterweise R^{a}ₘR^{b}ₙR^{c}ₒR^{d}ₚR^{e}_{q}R^{f}ₛSi₆O₉ mit m, n, o, p, q und s gleich einer ganzen Zahl kleiner oder gleich 6 oder 0 und der Bedingung das m + n + o + p + q + s = 6. Im Falle gleicher Reste R, also der Bedingung R^{a} = R^{b} = R^{c} = R^{d} = R^{e} = R^{f} reduziert sich die Summenformel wieder zu R₆Si₆O₉. Besonders bevorzugt weisen die erfindungsgemäßen oligomeren Silasesquioxane als Rest R jeweils die gleiche Gruppe auf

Die erfindungsgemäßen oligomeren Silasesquioxane, aber auch andere, schon bekannte Silasesquioxane können mit dem erfindungsgemäßen Verfahren hergestellt werden. Dieses erfindungsgemäße Verfahren eignet sich zur Herstellung von oligomeren Silasesquioxanen der Formel R₆Si₆O₉ mit R = i-Butyl, Benzyl, Cycloalkyl, Alkenyl, Cycloalkenyl, Alkinyl, Cycloalkinyl, und/oder Heteroaryl und der Struktur **I** durch Kondensation von Monomeren der Formel RSiX₃, wobei X eine hydrolisierbare Gruppe oder eine zu einer Kondensationsreaktion befähigte Gruppe sein kann, und ist dadurch gekennzeichnet, dass die Kondensation in Lösung mit einer Konzentration an Monomeren von größer 0,2 mol/l durchgeführt wird. Vorzugsweise beträgt die Konzentration der Monomeren in der Lösung größer 0,4 mol/l und ganz besonders bevorzugt von 0,5 mol/l bis 2,5 mol/l.

Die Kondensationsreaktion kann auf eine dem Fachmann bekannte Weise durchgeführt werden.

Vorzugsweise werden als Monomere Verbindungen des Typs RSiX₃ solche eingesetzt, die als Gruppen X zumindest eine Gruppe, ausgewählt aus -OH, -ONa, -OK, -OR', -OCOR', -OSiR'₃, - Cl, -Br, -I und/oder -NR'₂, wobei R' einen organischen Rest oder Wasserstoff bedeutet, aufweisen. Es können als Monomere solche Verbindungen eingesetzt werden, die als Gruppen X jeweils die gleichen Gruppen aufweisen, wie z.B. (Methyl)SiCl₃ oder (Cyclohexyl)Si(OH)₃, aber auch solche, die als Gruppen X unterschiedliche Gruppen aufweisen, wie z.B. (Methyl)SiCl₂(OH) oder (Cyclohexyl)Si(OR')₂Cl. Vorzugsweise werden als Monomere Verbindungen des Typs RSiX₃ eingesetzt werden, bei denen alle drei Gruppen X gleich sind.

Als Monomer wird zumindest eine Verbindung des Typs RSiX₃ eingesetzt, die als Rest R zumindest eine i-Butyl-, Cyclopropyl-, Cyclobutyl-, Cyclopentyl-, Cycloheptyl-, Cyclooctanyl-, Cyclononanyl-, Cyclodecanyl-, Vinyl-, Propenyl-, ein- oder mehrfach ungesättigte Butenyl-, Cyclopropenyl-, ein- oder mehrfach ungesättigte Cyclobutenyl-, ein- oder mehrfach ungesättigte Cyclopentenyl-, ein- oder mehrfach ungesättigte Cyclohexenyl-, ein- oder mehrfach ungesättigte Cycloheptenyl-, ein- oder mehrfach ungesättigte Cyclooctenyl-, Ethin-, Propin-, ein- oder mehrfach ungesättigte Butin-, Benzyl- oder Pyridylgruppe aufweist.

Es kann auch vorteilhaft sein, in der Lösung zwei oder mehr unterschiedliche Monomere einzusetzen, z. B. RSiCl₃ und RSi(OH)₃. Vorzugsweise wird die Kondensation in einer Lösung durchgeführt, die nur eine Sorte Monomere aufweist.

Bevorzugt wird die hydrolytische Kondensation ohne Katalysator durchgeführt. Zur Steuerung bzw. Beschleunigung der Reaktion kann aber die Verwendung von Katalysatoren vorteilhaft sein. Das erfindungsgemäße Verfahren der Kondensation kann deshalb in Abwesenheit eines Katalysators oder in Gegenwart von zumindest einem aciden oder einem basischen Katalysator durchgeführt werden. Als basischer Katalysator wird vorzugsweise eine organische oder anorganische Base eingesetzt. Ganz besonders bevorzugt wird als basischer Katalysator zumindest eine Verbindung, ausgewählt aus KOH, NaOH, (C₂H₅)₄NOH, C₆H₅CH₂(CH₃)₃NOH, (CH₃)₄NOH und (C₂H₅)₃N oder eine Mischung dieser Verbindungen eingesetzt. Als acider Katalysator wird vorzugsweise eine organische oder anorganische acide Verbindung eingesetzt. Ganz besonders bevorzugt wird als acider Katalysator zumindest eine Verbindung, ausgewählt aus Salzsäure (HCl), ZnCl₂, AlCl₃, HClO₄, Essigsäure (CH₃COOH), Salpetersäure (HNO₃) und Schwefelsäure (H₂SO₄) oder eine Mischung dieser Verbindungen eingesetzt.

Die Kondensation wird in Lösung durchgeführt. Als Lösemittel kann sowohl ein polares Solvent als auch ein unpolares Solvent verwendet werden. Besonders bevorzugt wird die Kondensation in einer Lösung, die als Lösemittel zumindest eine Verbindung, ausgewählt aus Alkoholen, Ketonen, Aldehyden, Ethern, Säuren, Estern, Anhydriden, Alkanen, Aromaten oder Nitrilen oder Mischungen aus einer oder mehrerer dieser Verbindungen aufweist, durchgeführt. Besonders bevorzugt werden Alkohole, Ether, Aceton, Acetonitril, Benzol oder Toluol als Lösemittel eingesetzt. Selbstverständlich können auch Mischungen von Lösemittel verwendet werden.

Je nachdem, welche Art von Monomeren eingesetzt wird kann es notwendig sein, dass Wasser während der Kondensation vorhanden ist. Dies ist davon abhängig, ob die Monomeren Hydroxylgruppen aufweisen oder nicht. Handelt es sich bei den Monomeren z.B. um Verbindungen der Formel RSi(OH)₃, so kann die Kondensation auch ohne Zusatz von Wasser erfolgen. Handelt es sich bei den Monomeren z.B. um Verbindungen der Formel RSiCl₃, so ist Wasser als Reaktionspartner notwendig, die Kondensation ablaufen kann (über die intermediär gebildeten Silanole). Vorzugsweise wird die Kondensation deshalb in Gegenwart von Wasser gestartet. Vorzugsweise wird dem Reaktionsgemisch vor Beginn der Kondensation Wasser, vorzugsweise von 0,1 bis 50 Gew.-%, besonders bevorzugt von 5 bis 50 Gew.-%, bezogen auf die das Monomer aufweisende Lösung, zugesetzt. Je nach Wassergehalt im Lösemittel können aber auch die vorhandenen Spuren an Wasser im Lösemittel genutzt werden.

Das erfindungsgemäße Verfahren bzw. die Kondensation kann bei einer Temperatur von -20 °C bis 300 °C, bevorzugt von 0 °C bis 200 °C, durchgeführt werden. Es kann vorteilhaft sein, die Temperatur während der Reaktion zu ändern. So kann es insbesondere vorteilhaft sein, die Temperatur zum Ende der Reaktion hin abzusenken, um das Produkt möglichst vollständig zu isolieren. Die Durchführung der Kondensationsreaktion an sich ist dem Fachmann bekannt.

Die Reaktion kann bei Normaldruck, Unterdruck oder Überdruck durchgeführt werden. Vorzugsweise wird die Reaktion bzw. Kondensation bei Normaldruck durchgeführt.

In einer besonders bevorzugten Ausführungsart des erfindungsgemäßen Verfahrens wird in einer Reaktionsblase mit aufgesetztem Kühler eine Lösung zumindest eines Monomeren der Formel RSiX₃ in zumindest einem Lösemittel vorgelegt. Diese Lösung wird unter Rückflusskühlung bis zum Sieden erhitzt und der siedenden Lösung wird unter kräftigem Rühren vorsichtig Wasser hinzugefügt. Die Lösung wird durch Abschalten der Wärmequelle langsam auf Raumtemperatur gebracht und für zumindest weitere 24 h, vorzugsweise zumindest 168 h gerührt.

Auf diese Weise wird ein Rohprodukt, welches zumindest ein oligomeres Silasesquioxan der Formel R₆Si₆O₉ aufweist, erhalten, das aus der Lösung abfiltriert wird und zumindest einmal mit dem Lösemittel, welches in der Lösung schon vorhanden war, gewaschen wird. Es kann vorteilhaft sein, den abfiltrierten Filterrückstand zu mörsern, erneut in einer geringen Menge des Lösemittels zu dispergieren und anschließend wieder abzufiltrieren. Dieser Vorgang kann so oft wiederholt werden, bis der gewünschte Reinheitsgrad des Filterrückstandes erreicht ist.

Zur weiteren Reinigung des Rückstandes, insbesondere zur Abtrennung von nicht vollständig kondensierten Silasesquioxanen von den vollständig kondensierten Silasesquioxanen der Formel R₆Si₆O₉, kann es vorteilhaft sein, den Filterrückstand zu trocknen und mit der drei- bis zehnfachen, vorzugsweise vier- bis siebenfachen Gewichtsmenge an Pyridin zu versetzen. Das vollständig kondensierte Silasesquioxan ist im Gegensatz zu den unvollständig kondensierten Silasesquioxanen in Pyridin nahezu unlöslich und kann abfiltriert werden: Auch dieser Vorgang kann je nach gewünschter Reinheit mehrfach wiederholt werden.

Es kann vorteilhaft sein, wenn das vollständig kondensierte Silasesquioxan nach dem Reinigen mittels Pyridin noch einmal umkristallisiert wird. Vorzugsweise erfolgt das Umkristallisieren aus Chloroform.

Die erfindungsgemäßen oligomeren Silasesquioxane oder die nach dem erfindungsgemäßen Verfahren hergestellten oligomeren Silasesquioxane der Formel R₆Si₆O₉ = i-Butyl, Benzyl, Cycloalkyl, Alkenyl, Cycloalkenyl, Alkinyl, Cycloalkinyl, Heteroaryl) und der Struktur **I** können in Verfahren für die Herstellung von nicht vollständig kondensierten Silasesquioxanen verwendet werden. Beispiele für nicht vollständig kondensierte Silasesquioxane sind z.B. Verbindungen des Typs R₇Si₇O₉(OH)₃ und R₆Si₆O₇(OH)₄. Bei diesen Verfahren können die oligomeren Silasesquioxane der Formel R₆Si₆O₉ (R = Alkyl, Cycloalkyl, Alkenyl, Cycloalkenyl, Alkinyl, Cycloalkinyl, Aryl, Heteroaryl) und der Struktur I z.B. mit Bu₄NOH und/oder einer Verbindung der Formel R¹Si(OR²)₃ wobei R¹ eine Alkylgruppe, die zumindest eine ungesättigte C-C-Doppelbindung aufweist, bedeutet und R² eine Alkylgruppe, vorzugsweise eine Methylgruppe bedeutet, umgesetzt werden.

Diese nicht vollständig kondensierten Silasesquioxane können als Ausgangsverbindungen in Verfahren für die Herstellung von Polymeren, z. B. durch hydrolytische Polykondensation, oder als Ausgangsverbindungen für die Herstellung von Katalysatoren, z. B. durch Reaktion der nicht vollständig kondensierten Silasesquioxane mit Metallverbindungen zu metallmodifizierten Silasesquioxanen (Metallasilasesquioxanen) dienen. Eine nachträgliche Modifizierung bzw. Substitution der Reste R ist selbstverständlich auch möglich.

Besonders bevorzugt werden die nicht vollständig kondensierten Silasesquioxane mit Metallen modifiziert. Bevorzugt werden Silasesquioxane mit Metallverbindungen der Nebengruppen inklusive der Lanthanoide und Actinoide und der 3. und 4. Hauptgruppe modifiziert. Bei diesen Verfahren werden die nicht vollständig modifizierten Silasesquioxane z.B. mit Metallalkoxiden, wie z.B. Ti(OBu^{t})₄, umgesetzt. Beispiele für metallmodifizierte Silasesquioxane, die auf diese Weise erhalten werden können, sind z.B. die Titanasilasesquioxane (C₅H₉)₆(CH₂CH)Si₇O₁₂Ti(OBu^{t}) bzw. (C₇H₁₃)₆(CH₂CH)Si₇O₁₂Ti(OBu^{t}).

Die folgenden Beispiele sollen die Erfindung näher erläutern, ohne ihren Schutzumfang einzuschränken:

### Beispiel 1: Herstellung eines oligomeren Silasesquioxans der Formel (C₆H₁₁)₆Si₆O₉

Zu einer Lösung von 100 g (460 mmol) C₆H₁₁SiCl₃ in 400 ml Aceton wurden unter Rühren vorsichtig 100 ml H₂O gegeben, wobei während der Zugabe die Lösung sieden sollte. Das Reaktionsgemisch wurde bei Raumtemperatur 168 h weitergerührt. Das Rohprodukt wurde abfiltriert und mit Aceton gewaschen. Der Filterrückstand wurde gemörsert und unter Rühren in 70 ml Aceton dispergiert. Nach 1 Stunde wurde der Feststoff durch Filtration isoliert und bei 40 °C für 12 Stunden getrocknet. Das Produktgemisch wurde mit der fünffachen Gewichtsmenge an Pyridin versetzt und die Suspension 30 Minuten gerührt. Nach Filtration und Waschen mit Pyridin erfolgte die Umkristallisation aus Chloroform. Man erhielt 15.4 g (19.0 mmol) (C₆H₁₁)₆Si₆O₉. Dies entsprach einer Ausbeute von 24.9 %.

### Beispiel 2 : Herstellung eines oligomeren Silasesquioxans der Formel (C₅H₉)₆Si₆O₉

Zu einer Lösung von 93 g (457 mmol) C₅H₉SiCl₃ in 400 ml Aceton werden unter Rühren vorsichtig 100 ml H₂O gegeben, wobei während der Zugabe die Lösung sieden sollte. Das Reaktionsgemisch wird bei Raumtemperatur 168 h weitergerührt. Das Rohprodukt wird abfiltriert und mit Aceton gewaschen. Der Filterrückstand wird gemörsert und unter Rühren in 70 ml Aceton dispergiert. Nach 1 Stunde wird der Feststoff durch Filtration isoliert und bei 40 °C für 12 Stunden getrocknet. Das Produktgemisch wird mit der fünffachen Gewichtsmenge an Pyridin versetzt und die Suspension 30 Minuten gerührt. Nach Filtration und Waschen mit Pyridin erfolgt die Umkristallisation aus Chloroform. Man erhält 11.6 g (16.0 mmol) (C₅H₉)₆Si₆O₉. Dies entspricht einer Ausbeute von 21.0 %.

### Beispiel 3 : Herstellung eines oligomeren Silasesquioxans der Formel (C₇H₁₃)₆Si₆O₉

Zu einer Lösung von 106 g (458 mmol) C₇H₁₃SiCl₃ in 400 ml Aceton werden unter Rühren vorsichtig 100 ml H₂O gegeben, wobei während der Zugabe die Lösung sieden sollte. Das Reaktionsgemisch wird bei Raumtemperatur 168 h weitergerührt. Das Rohprodukt wird abfiltriert und mit Aceton gewaschen. Der Filterrückstand wird gemörsert und unter Rühren in 70 ml Aceton dispergiert. Nach 1 Stunde wird der Feststoff durch Filtration isoliert und bei 40 °C für 12 Stunden getrocknet. Das Produktgemisch wird mit der fünffachen Gewichtsmenge an Pyridin versetzt und die Suspension für 30 Minuten gerührt. Nach Filtration und Waschen mit Pyridin erfolgt die Umkristallisation aus Chloroform. Man erhält 13.0 g (14.5 mmol) (C₇H₁₃)₆Si₆O₉. Dies entspricht einer Ausbeute von 19.0 %.

### Beispiel 4: Herstellung nicht vollständig kondensierter Silasesquioxane unter Verwendung einer Verbindung der Formel R₆Si₆O₉

Eine Lösung von 1.99 g (2.74 mmol) (C₅H₉)₆Si₆O₉ in 10 ml THF wird mit 1.85 ml (2.77 mmol) einer wässrigen Bu₄NOH versetzt und 1 Stunde bei 25 °C gerührt. Anschließend erfolgt die Neutralisation mit 2 M Salzsäure. Das Lösemittel wird entfernt, der Rückstand in Diethylether gelöst und die Lösung über Magnesiumsulfat getrocknet. Nach dem Einengen des Lösemittels wird (C₅H₉)₆Si₆O₇(OH)₄ in quantitativer Ausbeute erhalten.

### Beispiel 5: Herstellung nicht vollständig kondensierter Silasesquioxane unter Verwendung einer Verbindung der Formel R₆Si₆O₉

1.85 ml (2.77 mmol) einer wässrigen Lösung von Bu₄NOH werden zu einer Lösung von 1.99 g (2.74 mmol) (C₅H₉)₆Si₆O₉ und 0,42 ml (Vinyl)Si(OMe)₃ in 10 ml THF gegeben. Die Lösung wird 12 h gerührt, das Lösemittel entfernt, der Rückstand in Diethylether gelöst und die Lösung über Magnesiumsulfat getrocknet. Nach dem Einengen des Lösemittels wird (C₅H₉)₆(CH₂CH)Si₇O₉(OH)₃ in quantitativer Ausbeute erhalten.

### Beispiel 6: Herstellung nicht vollständig kondensierter Silasesquioxane unter Verwendung einer Verbindung der Formel R₆Si₆O₉

Eine Lösung von 2.45 g (2.74 mmol) (C₇H₁₃)₆Si₆O₉ in 10 ml THF wird mit 1.85 ml (2.77 mmol) einer wässrigen Bu₄NOH versetzt und 1 Stunde bei 25 °C gerührt. Anschließend erfolgt die Neutralisation mit 2 M Salzsäure. Das Lösemittel wird entfernt, der Rückstand in Diethylether gelöst und die Lösung über Magnesiumsulfat getrocknet. Nach dem Einengen des Lösemittels wird (C₇H₁₃)₆Si₆O₇(OH)₄ in quantitativer Ausbeute erhalten.

### Beispiel 7: Herstellung nicht vollständig kondensierter Silasesquioxane unter Verwendung einer Verbindung der Formel R₆Si₆O₉

1.85 ml (2.77 mmol) einer wässrigen Lösung von Bu₄NOH werden zu einer Lösung von 2.45 g (2.74 mmol) (C₇H₁₃)₆Si₆O₉ und 0.42 ml (Vinyl)Si(OMe)₃ in 10 ml THF gegeben. Die Lösung wird 12 h gerührt, das Lösemittel entfernt, der Rückstand in Diethylether gelöst und die Lösung über Magnesiumsulfat getrocknet. Nach dem Einengen des Lösemittels wird (C₇H₁₃)₆(CH₂CH)Si₇O₉(OH)₃ in quantitativer Ausbeute erhalten.

### Beispiel 8: Herstellung von mit Titan modifizierten Silasesquioxanen unter Verwendung nicht vollständig kondensierter Silasesquioxane

Zu einer Lösung aus 2.3 g (2.76 mmol) (C₅H₉)₆(CH₂CH)Si₇O₉(OH)₃ in 100 ml Toluol wird 1 g (2.94 mmol) Ti(OBu^{t})₄ gegeben und das Reaktionsgemisch 30 Minuten gerührt. Der Feststoff wird anschließend abfiltriert, in Toluol gelöst und mit Acetonitril wieder ausgefällt. Dabei werden 1.58 g (1.66 mmol) (C₅H₉)₆(CH₂CH)Si₇O₁₂Ti(OBu^{t}) als weißer Feststoff erhalten (60 % Ausbeute).

### Beispiel 9: Verfahren zur Herstellung von mit Titan modifizierten Silasesquioxanen unter Einsatz nicht vollständig kondensierter Silasesquioxane

Zu einer Lösung aus 2.7 g (2.70 mmol) (C₇H₁₃)₆(CH₂CH)Si₇O₉(OH)₃ in 100 ml Toluol wird 1 g (2.94 mmol) Ti(OBu^{t})₄ gegeben und das Reaktionsgemisch 30 Minuten gerührt. Der Feststoff wird anschließend abfiltriert, in Toluol gelöst und mit Acetonitril wieder ausgefällt. Dabei werden 1.66 g (1.49 mmol) (C₇H₁₃)₆(CH₂CH)Si₇O₁₂Ti(OBu^{t}) als weißer Feststoff erhalten (55 % Ausbeute).

## Patentansprüche

1. Oligomere Silasesquioxane der Formel R₆Si₆O₉ mit R = i-Butyl, Benzyl, Cycloalkyl ungleich Cyclohexyl, Alkenyl, Cycloalkenyl, Alkinyl, Cycloalkinyl und/oder Heteroaryl und der Struktur I, wobei die Reste R substituiert oder unsubstituiert vorliegen.

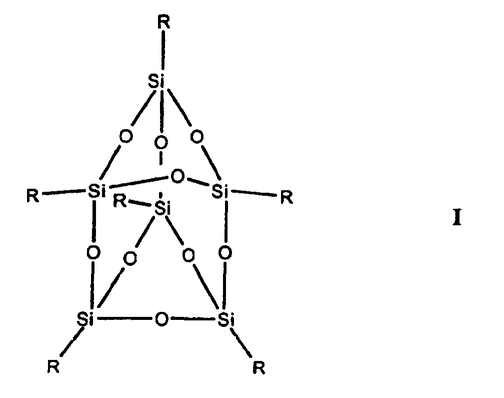

2. Oligomere Silasesquioxane gemäß Anspruch 1,
**dadurch gekennzeichnet,**
**dass** sie als Rest R zumindest eine i-Butyl-, Cyclopropyl-, Cyclobutyl-, Cyclopentyl-, Cycloheptyl-, Cyclooctanyl-, Cyclononanyl-, Cyclodecanyl-, Vinyl-, Propenyl-, ein- oder mehrfach ungesättigte Butenyl-, Cyclopropenyl-, ein- oder mehrfach ungesättigte Cyclobutenyl-, ein- oder mehrfach ungesättigte Cyclopentenyl-, ein- oder mehrfach ungesättigte Cyclohexenyl-, ein- oder mehrfach ungesättigte Cycloheptenyl-, ein- oder mehrfach ungesättigte Cyclooctenyl-, Ethin-, Propin-, ein- oder mehrfach ungesättigte Butin-, Benzyl- und/oder Pyridylgruppe aufweisen.

3. Oligomere Silasesquioxane gemäß einem der Ansprüche 1 bis 2,
**dadurch gekennzeichnet,**
**dass** sie als Rest R zumindest eine Cyclopentyl-, und/oder eine Cycloheptyl-Gruppe aufweisen.

4. Oligomere Silasesquioxane gemäß einem der Ansprüche 1 bis 3,
**dadurch gekennzeichnet,**
**dass** sie als Rest R jeweils die gleiche Gruppe aufweisen.

5. Verfahren zur Herstellung von oligomeren Silasesquioxanen der Formel R₆Si₆O₉ mit R = i-Butyl, Benzyl, Cycloalkyl, Alkenyl, Cycloalkenyl, Alkinyl, Cycloalkinyl und/oder Heteroaryl und der Struktur **I** durch Kondensation von Monomeren der Formel RSiX₃ wobei X eine hydrolisierbare Gruppe oder eine zu einer Kondensationsreaktion befähigte Gruppe sein kann,
**dadurch gekennzeichnet,**
**dass** die Kondensation in Lösung mit einer Konzentration an Monomeren von größer 0,2 mol/I durchgeführt wird.

6. Verfahren nach Anspruch 5,
**dadurch gekennzeichnet,**
**dass** die Konzentration der Monomeren in der Lösung größer 0,4 mol/l beträgt.

7. Verfahren nach Anspruch 5 oder 6,
**dadurch gekennzeichnet,**
**dass** die Konzentration der Monomeren 0,5 mol/1 bis 2,5 mol/1 beträgt.

8. Verfahren nach zumindest einem der Ansprüche 5 bis 7,
**dadurch gekennzeichnet,**
**dass** als Monomere Verbindungen des Typs RSiX₃ eingesetzt werden, die als Gruppen X zumindest eine Gruppe, ausgewählt aus -OH, -ONa, -OK, -OR', - OCOR', -OSiR'₃, -Cl, -Br, -I und/oder -NR'₂, wobei R' einen organischen Rest oder Wasserstoff bedeutet, aufweisen.

9. Verfahren nach zumindest einem der Ansprüche 5 bis 8,
**dadurch gekennzeichnet,**
**dass** als Monomere Verbindungen des Typs RSiX₃ eingesetzt werden, bei denen alle drei Gruppen X gleich sind.

10. Verfahren nach zumindest einem der Ansprüche 5 bis 9,
**dadurch gekennzeichnet,**
**dass** als Monomere zumindest eine Verbindung des Typs RSiX₃ eingesetzt wird, die als Rest R zumindest eine i-Butyl-, Cyclopropyl-, Cyclobutyl-, Cyclopentyl-, Cycloheptyl-, Cyclooctanyl-, Cyclononanyl-, Cyclodecanyl-, Vinyl-, Propenyl-, ein- oder mehrfach ungesättigte Butenyl-, Cyclopropenyl-, ein- oder mehrfach ungesättigte Cyclobutenyl-, einoder mehrfach ungesättigte Cyclopentenyl-, ein- oder mehrfach ungesättigte Cyclohexenyl-, ein- oder mehrfach ungesättigte Cycloheptenyl-, ein- oder mehrfach ungesättigte Cyclooctenyl-, Ethin-, Propin-, ein- oder mehrfach ungesättigte Butin-, Benzyl- oder Pyridylgruppe aufweist.

11. Verfahren nach einem der Ansprüche 5 bis 10,
**dadurch gekennzeichnet,**
**dass** die Kondensation ohne Katalysator oder in Gegenwart von zumindest einem aciden oder zumindest einem basischen Katalysator durchgeführt wird.

12. Verfahren nach Anspruch 11,
**dadurch gekennzeichnet,**
**dass** als basischer Katalysator KOH, NaOH, (C₂H₅)₄NOH, C₆H₅CH₂(CH₃)₃NOH, (CH₃)₄NOH und/oder (C₂H₅)₃N eingesetzt wird.

13. Verfahren nach Anspruch 11,
**dadurch gekennzeichnet,**
**dass** als acider Katalysator Salzsäure, Schwefelsäure, Salpetersäure, ZnCl₂, AlCl₃, HClO₄ und/oder Essigsäure eingesetzt wird.

14. Verfahren nach einem der Ansprüche 5 bis 13,
**dadurch gekennzeichnet,**
**dass** die Kondensation in einer Lösung, die als Lösemittel zumindest eine Verbindung, ausgewählt aus Alkoholen, Ketonen, Aldehyden, Ethern, Säuren, Estern, Anhydriden, Alkanen, Aromaten oder Nitrilen oder Mischungen aus einer oder mehrerer dieser Verbindungen aufweist, durchgeführt wird.

15. Verfahren nach einem der Ansprüche 5 bis 14,
**dadurch gekennzeichnet,**
**dass** die Kondensation bei einer Temperatur von -20 °C bis 300 °C durchgeführt wird.

16. Verwendung der oligomeren Silasesquioxane gemäß zumindest einem der Ansprüche 1 bis 4 oder eines gemäß zumindest einem der Ansprüche 5 bis 15 hergestellten oligomeren Silasesquioxans der Formel R₆Si₆O₉ (R = i-Butyl, Benzyl, Cycloalkyl, Alkenyl, Cycloalkenyl, Alkinyl, Cycloalkinyl, Heteroaryl) und der Struktur **I** für die Synthese von nicht vollständig kondensierten Silasesquioxanen, von Katalysatoren und deren Ausgangsverbindungen sowie von Polymeren.

17. Verwendung der oligomeren Silasesquioxane gemäß zumindest einem der Ansprüche 1 bis 4 oder eines gemäß zumindest einem der Ansprüche 5 bis 15 hergestellten oligomeren Silasesquioxans der Formel R₆Si₆O₉ (R = i-Butyl, Benzyl, Cycloalkyl, Alkenyl, Cycloalkenyl, Alkinyl, Cycloalkinyl, Heteroaryl) und der Struktur **I** für die Hydrolyse zu nicht vollständig kondensierten Silasesquioxanen und weitere Derivatisierung dieser unvollständig kondensierten Silasesquioxane zu funktionalisierten Silasesquioxanen, zu Katalysatoren, zu Katalysatorvorstufen sowie zu Polymeren.

## Claims

1. An oligomeric silasesquioxane having the formula R₆Si₆O₉ where R = i-butyl, benzyl, cycloalkyl other than cyclohexyl, alkenyl, cycloalkenyl, alkynyl, cycloalkynyl and/or heteroaryl and the structure **I**, where the radicals R are substituted or unsubstituted

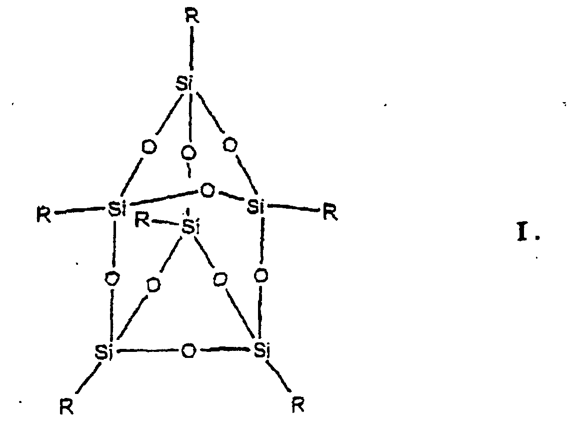

2. An oligomeric silasesquioxane according to claim 1, **characterized in that** the radicals R include at least one i-butyl, cyclopropyl, cyclobutyl, cyclopentyl, cycloheptyl, cyclooctanyl, cyclononanyl, cyclodecanyl, vinyl, propenyl, monounsaturated or polyunsaturated butenyl, cyclopropenyl, monounsaturated or polyunsaturated cyclobutenyl, monounsaturated or polyunsaturated cyclopentenyl, monounsaturated or polyunsaturated cyclohexenyl, monounsaturated or polyunsaturated cycloheptenyl, monounsaturated or polyunsaturated cyclooctenyl, ethynyl, propynyl, monounsaturated or polyunsaturated butynyl, benzyl and/or pyridyl group.

3. An oligomeric silasesquioxane according to either one of claims 1 and 2, **characterized in that** the radicals R include at least one cyclopentyl and/or cycloheptyl group.

4. An oligomeric silasesquioxane according to any one of claims 1 to 3, **characterized in that** the radicals R are all identical.

5. A process for preparing oligomeric silasesquioxanes having the formula R₆Si₆O₉ where R = i-butyl, benzyl, cycloalkyl, alkenyl, cycloalkenyl, alkynyl, cycloalkynyl and/or heteroaryl and the structure I by condensation of monomers of the formula RSiX₃, where X can be a hydrolysable group or a group capable of a condensation reaction, **characterized in that** the condensation is carried out in solution at a concentration of monomers of greater than 0.2 mol/l.

6. A process according to claim 5, **characterized in that** the concentration of monomers in the solution is greater than 0.4 mol/1.

7. A process according to claim 5 or 6, **characterized in that** the concentration of monomers is from 0.5 mol/1 to 2.5 mol/l.

8. A process according to at least one of claims 5 to 7, **characterized in that** the monomers used are compounds of the type RSiX₃ in which the groups X include at least one group selected from among - OH, -ONa, -OK, -OR', -OCOR', -OSiR'₃, -Cl, -Br, -I and/or -NR'₂, where R' is an organic radical or hydrogen.

9. A process according to at least one of claims 5 to 8, **characterized in that** the monomers used are compounds of the type RSiX₃ in which all three groups X are identical.

10. A process.according to at least one of claims 5 to 9, **characterized in that** the monomers used include at least one compound of the type RSiX₃ containing, as radical R, at least one i-butyl, cyclopropyl, cyclobutyl, cyclopentyl, cycloheptyl, cyclooctanyl, cyclononanyl, cyclodecanyl, vinyl, propenyl, monounsaturated or polyunsaturated butenyl, cyclopropenyl, monounsaturated or polyunsaturated cyclobutenyl, monounsaturated or polyunsaturated cyclopentenyl, monounsaturated or polyunsaturated cyclohexenyl, monounsaturated or polyunsaturated cycloheptenyl, monounsaturated or polyunsaturated cyclooctenyl, ethynyl, propynyl, monounsaturated or polyunsaturated butynyl, benzyl or pyridyl group.

11. A process according to any one of claims 5 to 10, **characterized in that** the condensation is carried out in the absence of a catalyst or in the presence of at least one acidic catalyst or at least one basic catalyst.

12. A process according to claim 11, **characterized in that** KOH, NaOH, (C₂H₅)₄NOH, C₆H₅CH₂(CH₃)₃NOH, (CH₃)₄NOH and/or (C₂H₅)₃N is/are used as basic catalyst.

13. A process according to claim 11, **characterized in that** hydrochloric acid, sulphuric acid, nitric acid, ZnCl₂, AlCl₃, HClO₄ and/or acetic acid is/are used as acidic catalyst.

14. A process according to any one of claims 5 to 13, **characterized in that** the condensation is carried out in a solution comprising, as solvent, at least one compound selected from among alcohols, ketones, aldehydes, ethers, acids, esters, anhydrides, alkanes, aromatics and nitriles and mixtures of two or more of these compounds.

15. A process according to any one of claims 5 to 14, **characterized in that** the condensation is carried out at a temperature of from -20°C to 300°C.

16. The use of an oligomeric silasesquioxane according to at least one of claims 1 to 4 or an oligomeric silasesquioxane prepared according to at least one of claims 5 to 15 and having the formula R₆Si₆O₉ (R = i-butyl, benzyl, cycloalkyl, alkenyl, cycloalkenyl, alkynyl, cycloalkynyl, heteroaryl) and the structure **I** for the synthesis of incompletely condensed silasesquioxanes, of catalysts and their starting compounds and also of polymers.

17. The use of an oligomeric silasesquioxane according to at least one of claims 1 to 4 or an oligomeric silasesquioxane prepared according to at least one of claims 5 to 15 and having the formula R₆Si₆O₉ (R = i-butyl, benzyl, cycloalkyl, alkenyl, cycloalkenyl, alkynyl, cycloalkynyl, heteroaryl) and the structure **I** for the hydrolysis to form incompletely condensed silasesquioxanes and further conversion of these incompletely condensed silasesquioxanes into functionalized silasesquioxanes, to form catalysts, to form catalyst precursors and to form polymers.

## Revendications

1. Silsesquioxanes oligomères de formule R₆Si₆O₉ dans laquelle R = i-butyle, benzyle, cycloalkyle à l'exception de cyclohexyle, alkényle, cycloalkényle, alkinyle, cycloalkinyle, et/ou hétéroaryle et de structure I 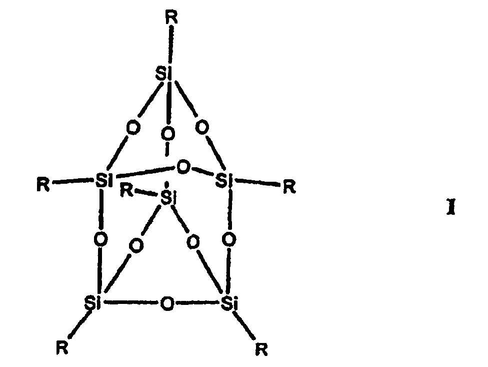 dans laquelle les restes R se présentent sous forme substituée ou non substituée.

2. Silsesquioxanes oligomères conformément à la revendication 1,
**caractérisés en ce qu'**
ils possèdent en tant que reste R au moins un groupe i-butyle, cyclopropyle, cyclobutyle, cyclopentyle, cycloheptyle, cyclooctanyle, cyclononanyle, cyclodécanyle, vinyle, propényle, butényle une fois ou plusieurs fois non saturé, cyclopropényle, cyclobutényle une fois ou plusieurs fois non saturé, cyclopentényle une fois ou plusieurs fois non saturé, cyclohexényle une fois ou plusieurs fois non saturé, cycloheptényle une fois ou plusieurs fois non saturé, cyclooctényle une fois ou plusieurs fois non saturé, éthyne, propyne, butyne une fois ou plusieurs fois non saturé, benzyle et/ou pyridyle.

3. Silsesquioxanes oligomères conformément à l'une des revendications 1 ou 2,
**caractérisés en ce qu'**
ils possèdent comme reste R au moins un groupe cyclopentyle et/ou un groupe cycloheptyle.

4. Silsesquioxanes oligomères conformément à l'une des revendications 1 à 3,
**caractérisés en ce qu'**
ils possèdent comme reste R à chaque fois les mêmes groupes.

5. Procédé de préparation de silsesquioxanes oligomères de formule R₆Si₆O₉ avec R = i-butyle, benzyle, cycloalkyle, alkényle, cycloalkényle, alkinyle, cycloalkinyle, et/ou hétéroaryle et de structure I par condensation de monomères de formule RSiX₃ dans laquelle X peut être un groupe hydrolysable ou un groupe apte à une réaction de condensation,
**caractérisé en ce que**
la condensation est effectuée en solution avec une concentration en monomères supérieure à 0,2 mol/1.

6. Procédé selon la revendication 5,
**caractérisé en ce que**
la concentration des monomères dans la solution s'élève à plus de 0,4 mol/l.

7. Procédé selon la revendication 5 ou la revendication 6,
**caractérisé en ce que**
la concentration des monomères s'élève à 0,5 mol/1 à 2,5 mol/l.

8. Procédé selon au moins l'une des revendications 5 à 7,
**caractérisé en ce qu'**
on met en oeuvre en tant que monomères des composés du type RSiX₃ qui possèdent comme groupes X au moins un groupe choisi parmi -OH, - ONa, -OK, -OR', -OCOR', -OSiR'₃, -Cl, -Br, -I et/ou -NR'₂ dans lesquels R' signifie un reste organique ou de l'hydrogène.

9. Procédé selon au moins l'une des revendications 5 à 8,
**caractérisé en ce qu'**
on met en oeuvre comme monomères des composés du type RSiX₃ dans lesquels tous les trois groupes X sont identiques.

10. Procédé selon au moins l'une des revendications 5 à 9,
**caractérisé en ce qu'**
on met en oeuvre comme monomères au moins un composé du type RSiX₃ qui possède comme reste R, au moins un groupe i-butyle, cyclopropyle, cyclobutyle, cyclopentyle, cycloheptyle, cyclooctanyle, cyclononanyle, cyclodécanyle, vinyle, propényle, cyclobutényle une fois ou plusieurs fois non saturé, cyclopropényle, cyclobutényle une ou plusieurs fois non saturé, cyclopentényle une ou plusieurs fois non saturé, cyclohexényle une ou plusieurs fois non saturé, cycloheptényle une ou plusieurs fois non saturé, cyclooctényle une ou plusieurs fois non saturé, éthyne, propyne, butyne une ou plusieurs fois non saturé, benzyle ou pyridyle.

11. Procédé selon l'une des revendications 5 à 10,
**caractérisé en ce qu'**
on effectue la condensation sans catalyseur ou en présence d'au moins un catalyseur acide ou d'au moins un catalyseur basique.

12. Procédé selon la revendication 11,
**caractérisé en ce qu'**
on met en oeuvre comme catalyseur basique KOH, NaOH, (C₂H₅)₄NOH, C₆H₅CH₂(CH₃)₃NOH, (CH₃)₄NOH et/ou (C₂H₅)₃N.

13. °) Procédé selon la revendication 11,
**caractérisé en ce qu'**
on met en oeuvre comme catalyseur acide de l'acide chlorhydrique, de l'acide sulfurique, de l'acide nitrique, ZnCl₂, AlCl₃, HClO₄ et/ou de l'acide acétique.

14. Procédé selon l'une des revendications 5 à 13,
**caractérisé en ce qu'**
on effectue la condensation dans une solution qui possède comme solvant au moins un composé choisi parmi les alcools, les cétones, les aldéhydes, les éthers, les acides, les esters, les anhydres, les alkanes, les composés aromatiques ou les nitriles ou des mélanges à base d'une ou plusieurs de ces substances.

15. Procédé selon l'une des revendications 5 à 14,
**caractérisé en ce qu'**
on effectue la condensation à une température allant de -20°C à 300°C.

16. Utilisation des Silsesquioxanes oligomères conformément à au moins l'une des revendications 1 à 4 ou d'un silasesquioxane oligomérique préparé selon au moins l'une des revendications 5 à 15 de formule R₆Si₆O₉ (R = i-butyle, benzyle, cycloalkyle, alkényle, cycloalkényle, alkinyle, cyckoalkinyle, hétéroaryle et de structure I, en vue de la synthèse de silsesquioxanes non complètement condensés, de catalyseurs et de leurs produits précurseurs ainsi que de polymères.

17. Utilisation des Silsesquioxanes oligomères conformément à au moins l'une des revendications 1 à 4, ou d'un silsesquioxane oligomère préparé selon au moins l'une des revendications 5 à 15, de formule R₆Si₆O₉ (R = i-butyle, benzyle, cycloalkyle, alkényle, cycloalkényle, alkinyle, cycloalkinyle, hétéroaryle) et de structure I, en vue de l'hydrolyse en silsesquioxanes qui ne sont pas complètement condensés et d'autres formations de dérivés de ces silsesquioxanes qui ne sont pas complètement condensés en silsesquioxanes fonctionnalisés, en catalyseurs, en produits précurseurs de catalyseur, ainsi qu'en polymères.
